# Europäisches Patentamt
## European Patent Office
## Office européen des brevets

(11) Publication number: **0 047 123**
**B1**

(12) **EUROPEAN PATENT SPECIFICATION**

(45) Date of publication of patent specification: **15.01.86**

(51) Int. Cl.⁴: **C 10 L 11/00,** C 10 L 5/40,
C 10 L 7/02

(21) Application number: **81303880.9**

(22) Date of filing: **25.08.81**

(54) **Combustible compositions, firelighters, barbeque starters and firelogs.**

(30) Priority: **01.09.80 GB 8028163**

(43) Date of publication of application:
**10.03.82 Bulletin 82/10**

(45) Publication of the grant of the patent:
**15.01.86 Bulletin 86/03**

(84) Designated Contracting States:
**AT BE CH DE FR GB IT LI LU NL SE**

(56) References cited:
**EP-A-0 015 699**
**EP-A-0 036 783**
**EP-A-0 037 232**
**FR-A-2 433 045**
**GB-A- 649 597**
**GB-A-2 009 782**
**US-A-2 207 894**
**US-A-3 615 284**

(73) Proprietor: **RECKITT AND COLMAN PRODUCTS
LIMITED**
**P.O. Box 26 1-17, Burlington Lane**
**London W4 2RW (GB)**

(72) Inventor: **Fox, Rodney Thomas**
**37 South Street**
**Cottingham North Humberside (GB)**
Inventor: **Coan, Brian**
**59, Southfield Drive**
**Ferriby Hull (GB)**

(74) Representative: **Hardisty, David Robert et al**
**BOULT, WADE & TENNANT 27 Furnival Street**
**London EC4A 1PQ (GB)**

Courier Press, Leamington Spa, England.

## Description

The present invention relates to combustible compositions and includes compositions which in relatively small pieces are useful as firelighters as well as compositions which may be used to make artificial firelogs. The compositions of the invention may also be used as fuel.

Known combustible compositions include those compositions which are used as firelighters, charcoal igniters and artificial fire logs. Certain of these compositions comprise fuel in the form of a wax, gel or paste, optionally filled with organic, combustible solids such as wood waste, (e.g. wood flour or wood shavings).

United States Patent Specification No. 4165968 discloses a gelled alcohol containing expanded perlite for the special purpose of forming a thin surface coating on charcoal briquettes to make them easily lightable. This alcohol gel composition would not be suitable for use in bulk as a firelighter because it would flow during combustion producing a large burning surface area and hence burning for only a short period. The purpose of the expanded perlite in the composition is to give the coating produced on charcoal a rough surface which acts as a wick to give easy ignition, rapid flame spread and hence an increased rate of fuel consumption.

European Patent Application No. —A—0036783 is concerned with a method of manufacturing a firelighter characterised by combining kerosene, a binder in the form of a soap system, and filler arranged to open up the structure of the finished product to give a more effect combustion.

European Patent Application No. —A—0037232 discloses a method of manufacturing a firelighter characterised by the steps of combining kerosene, a binder in the form of a soap system, and perlite which is a volcanic glass. The disclosure of both these Specifications are accordingly concerned with a hydrocarbon fuel thickened with a soap.

U.S. Patent No. 3615284 discloses a solid fuel composition comprising as essential components thereof a paraffin wax, an ultra-high molecular eight polyethylene and palygorskite particles. Palygorskite is a clay of which particular examples are attapulgite and sepiolite.

British Patent Specification No. 649597 discloses a solid fuel which comprises a high molecular weight hydrocarbon, preferably a paraffin, and powdered chalk or kaolin which are mixed together to form a basic material which is subsequently mixed with paraformaldehyde. The powdered chalk or kaolin is the major component by weight of the composition exemplified.

US Patent No. 2207894 discloses an alcohol fuel of the nitrocellulose-gel having distributed therein a small amount of asbestos in the form of individual fine fibres.

We have found that the incorporation of particular inorganic solids into certain compositions which do not flow during combustion, and which therefore are themselves useful as fuel, firelighters of barbeque starters, can produce a decrease in the rate at which the fuel content of the combustible composition is consumed.

Accordingly, the present invention provides a combustible composition which does not flow substantially during combustion comprising a fuel in the form of a wax, gel, or paste and having dispersed therein an inorganic, particulate, non-combustible solid serving to decrease the rate at which the fuel burns on combustion of the composition and optionally a combustible filler material; and wherein the composition contains from 1 to 6% by weight of the inorganic, particulate, non-combustible solid which is chalk, china clay, diatomaceous earth, perlite rock, sand, inorganic microspheres obtained from boiler ash, vermiculite, talc or expanded vermiculite provided that the fuel is other than kerosene thickened with soap.

The fuel in wax, gel or paste form may for instance be an animal, mineral or vegetable wax, a gel formed from a combustible liquid or liquefiable fuel, e.g. a hydrocarbon such as kerosene or an alcohol, or a paste formed by emulsifying an oil in water.

The combustible composition may accordingly comprise a compacted mixture of a combustible organic solid, such as wax, wood waste, and the inorganic solid. The wax which serves to bind such a composition together may be a solid or semi-solid wax. The composition may optionally contain a combustible liquid such as kerosene, distillate, gas oil, white spirit, sump oil or oils of vegetable origin such as may be used in the paints and plastics industries, and/or oils or fats of animal origin.

Compositions of the above type may be formed into large pieces suitable as artificial firelogs.

A further type of combustible composition according to the invention may comprise as well as the inorganic solid a gelled combustible liquid, e.g. a vegetable or animal derived oil. The liquid may be gelled by means of a suitable thickener such as metal soap including aluminium stearates and octanoates, carboxymethyl cellulose, hydroxymethyl cellulose, hydroxypropyl cellulose, nitrocellulose, gums such as xanthan, arabic, tragacanth, shellacs, rosin, lignosulphates, tall oil cuts, quebracho extracts, caseinates, gelatin, higher alcohols, synthetic polymers such as polybutanols, ethylene copolymers, polyvinyl alcohols, polyvinyl acetate, vinyl cellulose, polyketones, polyesters, phenoxy resins, polymeric diols, vinyl butyral resins, vinyl acetate/polyvinyl chloride copolymers, N-cocohydroxybutyramide, polyamides and inorganics such as silica xerogel (known as "fumed silica"), thickening clays such as bentonite, laponite, montmorillonite and mixtures thereof. The gelling agent is selected so that composition will not flow during combustion to a significant extent.

The composition may contain a combustible organic solid such as wood waste or peat or plastics waste. Waxes may be incorporated into such compositions to act as additional fuel and in some cases to

2

help bind the composition. Conventional products of this general type but lacking the inorganic solid characteristic of the invention are known as "brown firelighters".

Examples of compositions according to the invention include an alcohol gelled by the use of a thickener as described above e.g. soap and/or silica xerogel (known as "fumed silica") as the fuel in combination with the inorganic solid.

A further type of composition according to the invention may comprise the inorganic solid and a water-immiscible fuel e.g. hydrocarbon oil or other oil, emulsified with water, to form a stiff paste e.g. by the action of suitable emulsifying agents optionally in conjunction with applications of high shear which has the effect of thickening the emulsion. Such an emulsion serves to provide the fuel in paste form.

The inorganic solid is preferably insoluble in water. Preferably, the inorganic non-combustible particulate solid has low bulk density, for example less than 0.4 g cm$^{-3}$.

The inorganic non-combustible particulate solid is chalk, china clay, diatomaceous earth, perlite rock, sand, Fillite which is a particulate inorganic solid separated from boiler ash and has the form of microspheres, vermiculite, talc, or exfoliated vermiculite.

Preferably, the density of the inorganic non-combustible particulate solid is similar to or less than that of the liquefiable fuel component. More preferably, the density of the solid is much less than that of the liquefiable fuel component.

Preferably, the particles of the inorganic non-combustible solid are impermeable to liquids, that is to say, the liquefiable fuel cannot completely penetrate the interior of the particles. This may be achieved by the use of solids that have a liquid-impermeable "skin" such as Fillite, or by coating the particulate material with a barrier material which may be a polymeric coating composition such as an alkyd resin or nitrocellulose or a heavy soap, a silicone, or silicate, or a viscous non-drying oil or a drying oil.

In order to minimize the opportunity for the solid to absorb liquid fuel, it is preferred that the solid be added to the other ingredients shortly before the composition becomes too stiff to allow the introduction of the solid.

The amount of the inorganic non-combustible solid that is included is in the range of from 1 to 6% by weight to the total composition.

The combustible composition may contain, in addition to the inorganic non-combustible particulate solid a proportion of combustible particulate material. Typical of such materials are:— wood wastes including wood flour, wood shavings or comminuted compressed wood wastes; peat in dried native or dried and comminuted precompressed form; coal fines; lignite; waste paper or cardboard; comminuted plant material such as comminuted compressed wastes from grain crops optionally partly hydrolysed, seeds such as linseed, rapeseed and millet which may be used whole or crushed including oil-mill waste, or seed hulls such as coconut husk, walnut shells and peach stones preferably in comminuted form; or mixtures thereof. All things which contribute significantly to the calorific value of the end product be it firelighter, barbeque starter or artificial firelog may be used.

Generally the proportion of such combustible solid material in the compositions of the invention will not exceed 80% by weight and more preferably will not be more than 70% by weight.

The composition according to the invention may generally be used as firelighters or charcoal igniters. Those compositions which are not self-supporting solids may be put up in sachets to provide unit doses or may be filled into collapsible tubes for dispensing in such doses as are desired.

Those compositions possessing sufficient structural integrity may suitably be made into artificial firelogs and these may contain fillite in order to provide a crackle effect.

The composition of the invention may be prepared in a variety of ways depending upon whether the final product is to be used as an ignition product for fires on the one hand or barbeque starters on the other hand or an artificial firelog. The manufacture of such product types is well understood and the incorporation of the selected inorganic non-combustible particulate material may be effected by mixing at a suitable stage depending upon whether the final composition is to include a mechanical mixture of fuel and solid organic combustible material, a gelled fuel without wood waste or a brown firelighter type product.

If the final product is to be of the first type, the inorganic non-combustible particulate material, optionally precoated with surface treatment material, may be admixed together with or separately from the solid organic combustible material into the fuel with stirring usually at slightly elevated temperature especially in those cases where a relatively high melting point fuel is employed. In some cases it may be suitable to slurry the inorganics optionally admixed with the fuel in liquid form and introduce them as a fluid into the final blend.

Where the final product is to be a gelled product, preferably the gel is formed first from suitable components, that is a thickener such as fumed silica or a soap and a fuel component in liquid form, for example in alcohol. The inorganic component may then be admixed therewith with stirring to achieve uniform distribution. However the inorganic solids may be dispersed in the fuel whilst it is in liquid form and then the mixture may be gelled by addition of soap or its formation in situ. It has been observed that the final product is often of stiffer consistency than the initially formed gel.

Preferably, when the soap is used for the gelling, the soap is a $C_{12}$—$C_{18}$ fatty acid derived soap. Preferably the soap is a saturated one since these give firmer gels. An example of a preferred material is sodium stearate. Heavier metal soaps such as aluminium stearate may additionally or alternatively be

# 0 047 123

used. The fuel does not have to be normally liquid and materials such as slack wax may be gelled with soap. Preferred proportions of fuel and soap are 3 to 25% by weight soap, more preferably 8 to 15% by weight soap, based on the weight of fuel and soap.

In the case of a brown firelighter type of final product where, for example a combustible liquid is gelled and mixed with wood waste to achieve a shape-retaining final solid that may be cut into blocks or moulded, the solid, particulate non-combustible material may be mixed with the gelling fuel component. Alternatively the inorganic solid may be mixed with the fuel in liquid form and the mixture may be gelled in situ. The freshly formed composition may be allowed to stand until of satisfactory consistency if it is desired to be cut into blocks subsequently. Alternatively, the mixture may be moulded into individual blocks and wrapped when set to handleable consistency.

Another means of presenting the product is in sachets, i.e. sealed envelopes which closely fit the outer surfaces of the blocks when set.

Where such a composition is to be used as an artificial firelog suitably large pieces may be moulded as by extrusion or compaction and optionally wrapped.

Combustible compositions of the present invention are preferably match ignitable.

The invention will now be illustrated by the following Examples in which parts are by weight:—

Example 1

An *iso*propanol gel composition was prepared by adding 5 parts of Cabosil M-5, a fumed silica, to 95 parts *iso*propanol with stirring.

2 parts of a non-combustible inorganic particulate solid was added with stirring to 100 parts of the gel.

30 g portions of the resultant pasty solid were ignited in a standard laboratory dish of diameter 65 mm and depth 12 mm and the burning time from ignition to self extinguishing end point was observed in each case. A control lacking non-combustible inorganic particulate solid was run for comparison. The results obtained were as follows:—

| Non-combustible inorganic particulate material | Observed burning time | | |
|---|---|---|---|
| | Min | — | Sec |
| Dupre Vermiculite Grade DF (exfoliated) | 21 | — | 03 |
| Fillite 100/7 | 19 | — | 35 |

| Non-combustible inorganic particulate material | Observed burning time | | |
|---|---|---|---|
| | Min | — | Sec |
| Speswhite Clay — a China clay | 19 | — | 15 |
| Diatomaceous earth — Celite 545 | 19 | — | 00 |
| Talc | 18 | — | 25 |
| Chalk | 17 | — | 25 |
| None | 15 | — | 30 |

Thus it may be seen that in each case the burning time was protracted as compared with the control. Cabosil, Fillite, Speswhite and Celite are Registered Trade Marks.

Example 2

An ethanol gel composition was prepared in analogous manner to that of Example 1 using industrial methylated spirit containing 5% w/w Cabosil M-5 fumed silica.

Dupre vermiculite Grade DF (exfoliated) was added to portions of this gel at increasing levels and the burning times were observed for 30 g aliquots of the soft, pasty solid resulting in a standard laboratory dish as in Example 1 with a control.

The results obtained were as follows:—

4

**0 047 123**

| %age w/w vermiculite | Observed burning time | | |
|---|---|---|---|
| | Min | — | Sec |
| None (Control) | 20 | — | 10 |
| 1 | 19 | — | 10 |
| 2 | 21 | — | 10 |
| 3 | 20 | — | 20 |
| 4 | 21 | — | 50 |
| 5 | 22 | — | 30 |

Whilst there is no significant protraction in burning time in most of these samples compared with the control, it is clear that at the same time there is no significant diminution thereof yet the amount of liquefiable fuel present decreases with increase in concentration of the vermiculite. That is to say an improvement in efficiency of burning fuel occurs. No difference in flame characteristics were observed. Dupre is a Registered Trade Mark.

Example 3

An ethanol gel was prepared from industrial methylated spirits by admixing with stearic acid at 10% w/w level with stirring and warming gently.

2 parts exfoliated vermiculite (Dupre Grade DF) was added to 98 part of the gel so-produced to produce a stiff paste and the burning time of 20 g aliquots was assessed in a manner analogous to Example 1 using a control lacking vermiculite.

The burning time of the control was 10.50 minute and that of the vermiculite containing gel was 14.5 minute. Thus the efficiency of burning alcohol increases on adding vermiculite at 2% level from 0.58 min per gram alcohol to 0.82 min per gram alcohol.

Example 4

A typical artificial firelog composition was prepared by melting 72 parts of Slackwax 11 and admixing with slow stirring 28 parts of a mixture of sawdust (26 parts) and exfoliated vermiculite (Dupre Grade DM) (2 parts) until uniform distribution was achieved.

The mixture was poured into a mould, lightly tamped with a pallet knife and left to harden. For convenience burning tests were conducted on firelighter sized fingers cut from the moulded block when cold and weighing about 35 g and sized 30.4×62.5×28 mm. A control lacking vermiculite was run. The tests were conducted in quadruplicate. Slackwax is a Registered Trade Mark.

| | Control | |
|---|---|---|
| Level of vermiculite present | none | 2% |
| Mean finger weight | 39.2 g | 37.9 g |
| Mean observed burning time | 24.7 min | 23.9 min |
| %age slackwax in sample | 72.0 | 70.0 |
| Weight slackwax per gram of finger | 28.2 g | 26.5 g |
| Burning time per gram of slackwax | 0.88 min | 0.90 min |

The inclusion of this grade of exfoliated vermiculite at 2% w/w level was found to reduce the density by about 3% compared with the control; the observed burning time is not significantly reduced and slackwax utilization was enhanced. Both products tended to drip slackwax slightly which is characteristic of this type of product.

A consideration of the above Examples shows that the compositions of the invention tested exhibit various surprising advantages over the controls.

First it has been found that a large reduction in density of the combustible composition may result from the addition of inorganic non-combustible particulate solid. Thus, in the case of wax/wood waste composition (Example 5 — 3% reduction) up to 9% reduction in density occurs in blocks suitable for artificial firelogs and containing little or no kerosene whilst the observed burn time (duration of burn in

5

## 0 047 123

minutes per unit size of block material) seems not to be reduced indicating an improvement in the efficiency in the utilization of the liquefiable fuel per unit volume of product.

The reduction in density is in itself advantageous since the bigger product may be produced without using extra fuel or the existing size of product may be maintained with a fuel saving.

The corresponding reduction in density of an ignition product for use as a firelighter and prepared from an otherwise typical brown firelighter composition (Example 4 — 3% reduction) is roughly 9% on addition of 2% w/w inorganic non-combustible particulate solid and the observed burning time was not significantly decreased emphasising the increased efficiency per unit volume of the product of the fuel on incorporation of relatively low concentrations of inorganic non-combustible particulate solid.

Whilst in many cases the incorporation of inorganic solid improves the efficiency of burning of the fuel, it is at present not clear how this effect is achieved. It could be due to the structure of the inorganic non-combustible particulate solid. In the case of the more solid compositions, the inorganic solid may merely provide a more or less rigid structure within a burning block preventing the shrinkage effect which normally accompanies burning of the block with consequent improvement of burning. Solid blocks exemplified above show an efficiency of fuel burning which tends towards the efficiency of so-called "white firelighters" in burning liquefiable fuel.

"White firelighter" is the term usually used for a firelighter composition having kerosene in liquid for encapsulated in tiny pores in a matrix of solid resin.

Again it may be due to a heat insulative effect of the inorganic non-combustible particulate solid causing reduced heat flow to the fuel in the interior of the block resulting in a reduced rate of vaporisation at the burning surface, or some combination of these effects.

Our copending European Patent Application No. 81303883.3 (EP—A—47124) describes and claims a block of a combustible composition comprising a gelled liquid or liquefiable fuel having expanded perlite dispersed therein.

Our copending European Patent Application No. 81303884.1 (EP—A—47125) describes and claims a combustible composition comprising a fuel in the form of a wax or paste and characterised in that there is expanded perlite dispersed therein serving to decrease the rate at which the fuel burns on combustion of the composition, and optionally a combustible filler material, provided that when the composition comprises a combustible filler material and the composition is one which has been formed hot, the composition contains from 0.5 to 6% by weight of the expanded perlite.

### Claims

1. A combustible composition which does not flow substantially during combustion comprising a fuel in the form of a wax, gel, or paste and characterised in that there is dispersed therein an inorganic, particulate, non-combustible solid serving to decrease the rate at which the fuel burns on combustion of the composition and optionally a combustible filler material; and wherein the composition contains from 1 to 6% by weight of the inorganic, particulate, non-combustible solid which is chalk, china clay, diatomaceous earth, perlite rock, sand, inorganic microspheres obtained from boiler ash, vermiculite, talc or expanded vermiculite provided that the fuel is other than kerosene thickened with soap.

2. A combustible composition as claimed in claim 1 further characterised in that the composition comprises a compacted mixture of a combustible organic solid, wax, and the inorganic, particulate, non-combustible material.

3. A combustible composition as claimed in claim 2 further characterised by comprising a combustible liquid.

4. A combustible composition as claimed in claim 1 further characterised by comprising a gelled liquid or liquefiable fuel and the inorganic, particulate, non-combustible solid.

5. A combustible composition as claimed in claim 4 and further characterised by comprising a combustible, organic solid.

6. A combustible composition as claimed in claim 2, claim 3 or claim 5 further characterised in that the said combustible, organic solid is wood waste, peat, or waste plastics, coal fines, lignite, comminuted waste paper or cardboard, or comminuted plant material.

7. A combustible composition as claimed in claim 1 and further characterised in that the composition comprises a water immiscible fuel emulsified with water to form a stiff paste and the inorganic, particulate, non-combustible solid.

8. A combustible composition as claimed in any preceding claim further characterised in that the inorganic, particulate, non-combustible solid has a bulk density of less than 0.4 g/cm$^3$.

9. A firelighter or barbeque starter comprising a block of a combustible composition as claimed in any preceding claim, a sachet of a combustible composition as claimed in any preceding claim, or a tube containing a combustible composition as claimed in any preceding claim.

10. An artificial firelog comprising a combustible composition as claimed in any one of claims 1 to 8.

### Patentansprüche

1. Eine brennbare Zusammensetzung, die im wesentlichen während des Brennens nicht fließt und die

6

einen Brennstoff in Form von Wachs, Gel oder einer Paste enthält, dadurch gekennzeichnet, daß darin ein anorganischer teilchenförmiger, nichtbrennbarer Feststoff dispergiert ist, um die Geschwindigkeit zu verringern mit der der Brennstoff bei der Verbrennung der Zusammensetzung brennt und der wahlweise einen brennbaren Füllstoff enthält und wobei die Zusammensetzung 1 bis 6 Gew.-% des anorganischen teilchenförmigen, nichtbrennbaren Feststoffes enthält der Kreide, Kaolin, Kieselerde, Perlitstein, Sand, anorganische Mikrospheren, die aus Kesselasche erhalten werden, Vermikulit, Talg oder expandierter Vermikulit ist unter der Voraussetzung, daß der Brennstoff nicht mit Seife verdicktes Kerosin ist.

2. Eine brennbare Zusammensetzung, nach Anspruch 1, dadurch gekennzeichnet, daß die Zusammensetzung eine festverbundene Mischung eines brennbaren organischen Feststoffes, Wachs und des anorganischen, teilchenförmigen, nichtbrennbaren Materials enthält.

3. Eine brennbare Zusammensetzung nach Anspruch 2, dadurch gekennzeichnet, daß sie eine brennbare Flüssigkeit enthält.

4. Eine brennbare Zusammensetzung nach Anspruch 1, dadurch gekennzeichnet, daß sie eine gelierte Flüssigkeit oder einen verflüssigbaren Brennstoff und den anorganischen, teilchenförmigen, nichtbrennbaren Feststoff enthält.

5. Eine brennbare Zusammensetzung nach Anspruch 4, dadurch gekennzeichnet, daß sie einen brennbaren organischen Feststoff enthält.

6. Eine brennbare Zusammensetzung nach Anspruch 2, 3 oder 5, dadurch gekennzeichnet, daß der besagte brennbare, organische Feststoff Holzabfälle, Torf, Kunststoffabfälle, Feinkohle, Lignit, zerkleinertes Altpapier oder Karton oder zerkleinertes Pflanzenmaterial ist.

7. Eine brennbare Zusammensetzung nach Anspruch 1, dadurch gekennzeichnet, daß die Zusammensetzung einen nicht mit Wasser mischbaren Brennstoff, der mit Wasser zu einer festen Paste emulgiert ist und den anorganischen, teilchenförmigen, nichtbrennbaren Feststoff enthält.

8. Eine brennbare Zusammensetzung nach einem der vorhergehenden Ansprüch dadurch gekennzeichnet, daß der anorganische, teilchenförmige nichtbrennbare Feststoff eine Schüttdichte von weniger 0,4 g/cm³ hat.

9. Ein Feueranzünder oder einen Grillanzünder, dadurch gekennzeichnet, daß er einen Block der brennbaren Zusammensetzung nach einem der vorhergehenden Ansprüche ein Sachet einer brennbaren Zusammensetzung nach einem der vorhergehenden Ansprüche oder eine mit einer brennbaren Zusammensetzung nach einem der vorhergehenden Ansprüche gefüllte Röhre enthält.

10. Ein künstlicher Feuerscheit, dadurch gekennzeichnet, daß er eine brennbare Zusammensetzung nach einem der Ansprüche 1 bis 8 enthält.

**Revendications**

1. Une composition combustible ne coulant pratiquement pas pendant sa combustion, contenant un combustible sous forme de cire, de gel ou de pâte et caractérisée en ce qu'elle contient, à l'état dispersé, un solide inorganique non combustible sous forme de particules qui sert à diminuer la vitesse à laquelle le combustible brûle lors de la combustion de la composition, et facultativement une matière de charge combustible, et que la composition contient de 1 à 6% en poids dudit solide inorganique non combustible sous forme de particules, qui est de la craie, du kaolin, de la terre d'infusoires, de la perlite (roche), du sable, des microsphères inorganiques obtenues à partir de cendre de chaudière, de la vermiculite, du talc ou de la vermiculite expansée à condition que le caburant ne soit pas du kérosène épaissi avec un savon.

2. Une composition combustible telle que revendiquée dans la revendication 1, caractérisée en outre en ce qu'elle contient un mélange comprimé d'un solide organique combustible, de cire et de ladite matière inorganique non combustible sous forme de particules.

3. Une composition combustible telle que revendiquée dans la revendication 2, caractérisée en outre en ce qu'elle contient un liquide combustible.

4. Une composition combustible telle que revendiquée dans la revendication 1, caractérisée en outre par le fait qu'elle contient un combustible liquide ou liquéfiable gélifié et ledit solide inorganique non combustible sous forme de particules.

5. Une composition combustible telle que revendiquée dans la revendication 4, caractérisée en outre en ce qu'elle contient un solide organique combustible.

6. Une composition combustible telle que revendiquée dans la revendication 2, la revendication 3 ou la revendication 5, caractérisée en outre en ce que ledit solide organique combustible est des déchets de bois, de la tourbe, des déchets de plastique, des fines de charbon, du lignite, des vieux papiers ou vieux cartons finement fragmentés ou de la matière végétale finement fragmentée.

7. Une composition combustible telle que revendiquée dans la revendication 1, caractérisée en outre en ce qu'elle contient un combustible non miscible à l'eau émulsionné avec de l'eau pour former une pâte épaisse, et le solide inorganique non combustible sous forme de particules.

8. Une composition combustible telle que revendiquée dans l'une quelconque des revendications précédentes, caractérisée en outre en ce que le solide inorganique non combustible sous forme de particules a une masse volumique apparente inférieure à 0,4 g/cm³.

9. Un allume-feu ou allumeur de barbecue constitué d'un bloc d'une composition combustible telle que revendiquée dans l'une des revendications précédentes, d'un sachet d'une composition combustible telle

**0 047 123**

que revendiquée dans l'une quelconque des revendications précédentes ou d'un tube contenant une composition combustible selon l'une des revendications précédentes.

10. Une bûche artificielle constituée d'une composition combustible telle que revendiquée dans l'une quelconque des revendications 1 à 8.

8